# FASCICULE DE BREVET EUROPEEN

(11) **EP 1 471 282 B1**
(45) Date de publication et mention de la délivrance du brevet: **27.05.2009**
(21) Numéro de dépôt: 04300127.0
(22) Date de dépôt: 08.03.2004
(51) Int. Cl.: F16H 3/00, F16H 3/093

(54) **Boîte de vitesses compacte à deux embrayages**
Kompaktes Getriebe mit zwei Kupplungen
Compact transmission with two clutches

(30) Priorité: 17.03.2003 FR 0303223
(43) Date de publication de la demande: 27.10.2004
(73) Titulaire: RENAULT S.A.S., 92100 Boulogne Billancourt (FR)
(72) Inventeur: Raoul, Michel, 78990 Elancourt (FR)

(56) Documents cités:
- EP-A- 0 288 779
- EP-A- 1 245 863
- DE-A- 19 923 185
- FR-A- 2 802 600
- US-A- 4 461 188

## Description

L'invention concerne une boîte de vitesses de véhicule automobile compacte à deux embrayages.

Les caractéristiques de la première partie de la revendications 1 sont connues du US-A-4 461 188.

Elle concerne plus particulièrement une boîte de vitesses à arbres parallèles et à engrenages comportant un arbre primaire plein et un arbre primaire creux concentriques portant des pignons fixes, ainsi que deux arbres secondaires portant des pignons fous, dans laquelle les pignons fixes des deux premiers rapports de marche avant sont portés respectivement par l'arbre primaire plein et par l'arbre primaire creux.

Dans une telle boîte de vitesses, des pignons fixes portés par les arbres primaires engrènent avec des pignons fous qui sont portés par les arbres secondaires et qui sont susceptibles d'être sélectivement liés en rotation aux arbres qui les portent par des moyens de crabotage pour réaliser des engrenages indépendants correspondant à au moins deux rapports de marche avant et un rapport de marche arrière et permettre la transmission du couple du moteur aux roues du véhicule, les deux embrayages étant par ailleurs susceptibles d'être actionnés simultanément, en passant par un état où ils transmettent tous les deux le couple par glissement de l'un d'eux pour permettre les changements de rapports sans discontinuité du couple transmis aux roues du véhicule.

On connaît de nombreuses boîtes de vitesses du type indiqué ci-dessus.

Dans presque la totalité de celles-ci, l'arbre primaire plein porte un pignon fixe associé au premier rapport de marche avant et l'arbre primaire creux un pignon fixe associé au deuxième rapport de marche avant, de façon à réaliser un passage sous couple du premier rapport de marche avant au deuxième rapport de marche avant en actionnant sélectivement l'un ou l'autre des embrayages associés à l'un ou l'autre des arbres primaires. D'une manière générale, les pignons fixes des rapports impairs sont portés par l'arbre primaire plein et les pignons fixes des rapports pairs sont portés par l'arbre primaire creux, le rapport de marche arrière pouvant indifféremment être considéré à cet égard comme un rapport pair ou un rapport impair.

Le document FR 2 802 600 décrit un exemple d'un telle boîte de vitesses.

Ce type de boîtes de vitesses à rapports multiples, associée à deux embrayages et disposée transversalement aux roues avant pose un problème d'encombrement axial.

Pour remédier à cet inconvénient, l'invention propose les caractéristiques de la revendication 1.

Selon un mode de réalisation particulier de l'invention, les pignon fixes de l'arbre primaire plein et de l'arbre primaire creux qui engrènent avec un pignon fou de chaque arbre secondaire permettent d'établir respectivement avec ces pignons un troisième, un cinquième, un quatrième et un sixième rapport de marche avant.

Selon l'invention, les arbres secondaires attaquent une couronne de différentiel commune par deux pignons fixes et leurs rapport du nombre de dents donne le ratio du rapport de troisième sur le rapport de cinquième et celui du rapport de quatrième sur le rapport de sixième.

D'autres caractéristiques et avantages de l'invention apparaîtront à la lecture de la description suivante d'un mode de réalisation particulier de celle-ci, en se référant aux dessins annexés sur lesquels :
- la figure 1 est une vue schématique en coupe à plans rabattus selon la ligne A-A de la figure 2,
- la figure 2 est une vue selon la figure 1 représentant le cheminement du couple selon le rapport de marche arrière,
- la figure 3 est une vue selon la figure 1 représentant le cheminement du couple selon le rapport de première,
- la figure 4 est une vue selon la figure 1 représentant le cheminement du couple selon le rapport de deuxième,
- la figure 5 est une vue selon la figure 1 représentant le cheminement du couple selon le rapport de troisième,
- la figure 6 est une vue selon la figure 1 représentant le cheminement du couple selon le rapport de quatrième,
- la figure 7 est une vue selon la figure 1 représentant le cheminement du couple selon le rapport de cinquième, et
- la figure 8 est une vue selon la figure 1 représentant le cheminement du couple selon le rapport de sixième.

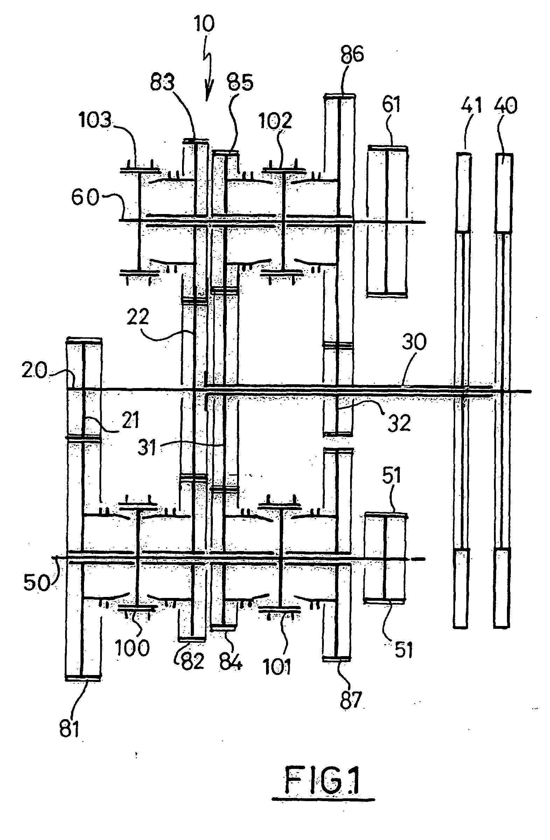

On a représenté sur la figure 1 l'ensemble d'une boîte de vitesses 10 réalisée suivant l'invention.

De manière connue, la boîte de vitesses 10 comporte un premier arbre primaire plein 20 qui est monté coaxialement à un second arbre primaire creux 30. Ces deux arbres sont montés à rotation dans un carter (non représenté) et entraînés par un moteur respectivement par l'intermédiaire d'un premier embrayage 40 et d'un second embrayage 41, qui sont à titre d'exemple, et de façon non limitative, des embrayages monodisque secs.

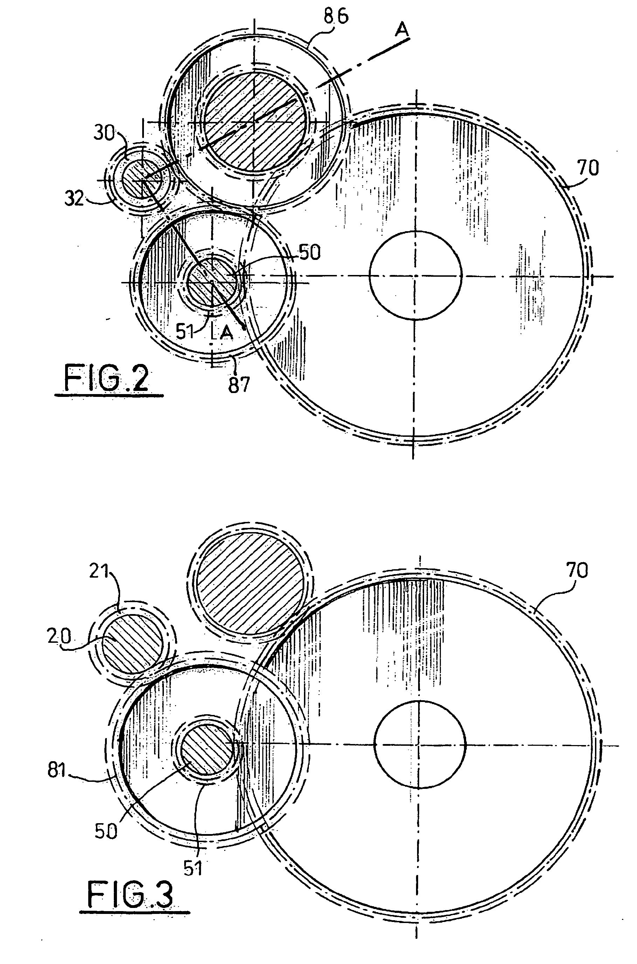

La boîte de vitesses comporte aussi un premier arbre secondaire 50 et un deuxième arbre secondaire 60, également montés à rotation dans le carter. Ces arbres secondaires sont agencés, comme le montre la figure 2, aux extrémités des branches d'un « V » compris dans le plan transversal aux axes des arbres 20, 30, 50 et 60, et dont le sommet est confondu avec l'axe des arbres primaires 20 et 30.

Des engrenages sont agencés entre les arbres primaires 20 et 30 et les arbres secondaires 50 et 60 de manière à transmettre le couple du véhicule à une couronne 70 (représentée sur les figures 2 à 8) d'un différentiel d'un pont (non représenté) entraînant les roues d'un véhicule. A cet effet, le premier arbre secondaire 50 et le second arbre secondaire 60 comportent respectivement un premier pignon d'attaque 51 et un second pignon d'attaque 61 qui engrènent tous deux avec la couronne 70 du différentiel.

Les engrenages sont constitués de pignons fixes qui sont portés par les premier et second arbres primaires 20 et 30, et qui engrènent avec des pignons fous qui sont portés par les premier et second arbres secondaires 50 et 60, lesquels pignons fous sont susceptibles d'être sélectivement liés en rotation aux premier et second arbres secondaires 50 et 60 par des moyens de crabotage indépendants pour réaliser des engrenages indépendants correspondant sélectivement à au moins deux rapports de marche avant et un rapport de marche arrière. Les deux embrayages 40 du premier arbre primaire 20 et 41 du deuxième arbre primaire 30 sont par ailleurs susceptibles d'être actionnés alternativement, en passant par un état où ils transmettent tous les deux le couple par glissement de l'un d'eux, pour permettre au moins un changement de rapport sans discontinuité de couple transmis aux roues.

Le premier arbre primaire 20 porte deux pignons fixes, de gauche à droite, 21 et 22. Le premier d'entre eux engrène avec un unique pignon fou 81, porté par le premier arbre secondaire 50, pour constituer le rapport de première, et le second d'entre eux engrène avec deux pignons fous 82 et 83, respectivement portés par le premier arbre secondaire 50 pour constituer le rapport de troisième et par le second arbre secondaire 60 pour constituer le rapport de cinquième Le second arbre primaire creux 30 porte également deux pignons fixes, de gauche à droite, 31 et 32, le premier d'entre eux engrenant avec deux pignons fous 84 et 85, respectivement portés par le premier arbre secondaire 50 pour constituer le rapport de quatrième et par le second arbre secondaire 60 pour constituer le rapport de sixième, tandis que le second d'entre eux engrène avec un pignon fou 86 porté le second arbre secondaire 60 pour constituer le rapport de deuxième. Le rapport de marche arrière a son propre pignon fou 87, porté par le premier arbre secondaire 50, qui engrène avec le pignon fou de deuxième 86 qui constitue un pignon intermédiaire de marche arrière.

L'ensemble des six rapports de marche avant et le rapport de marche arrière sont ainsi obtenus, conformément à l'invention, avec seulement deux pignons fixes 21 et 22 sur le premier arbre primaire plein 20 pour obtenir les rapports impairs et seulement deux pignons fixes 31 et 32 sur le second arbre primaire creux 30 pour obtenir les rapports pairs. Les pignons fixes 22, 31, engrènent chacun avec deux pignons, le premier avec les pignons fous 82 et 83, le second avec les pignons fous 84 et 85. Les pignons fixes 21 et 32 n'engrènent qu'avec un seul pignon respectivement 81 et 86 pour constituer les rapports de première et de deuxième.

Les distances entre d'une part les axes des arbres primaires 20 et 30 et le premier arbre secondaire 50, et d'autre part les axes des arbres primaires 20 et 30 et le second arbre secondaire 60, peuvent être différents. Mais, le fait de les choisir identiques permet, à condition de choisir également des dispositifs de crabotage identiques, d'adopter aussi des pignons fous identiques. Grâce à l'invention, les pignons 82 du rapport de troisième et 83 du rapport de cinquième peuvent donc être identiques, il en est de même pour les pignons 84 du rapport de quatrième et le pignon 85 du rapport de sixième.

Pour obtenir des rapports différents à partir d'une pignon fixe qui engrène avec deux pignons fous identiques, il faut choisir pour des pignons d'attaque 51, 61 du premier arbre secondaire 50 et du deuxième arbre secondaire 60 sur la couronne de différentiel, un rapport de nombre de dents approprié. Ainsi, pour obtenir les rapports de troisième et de cinquième à partir de l'unique pignon fixe 22 et des pignons fous identiques 82 et 83, il faut que le nombre de dents du pignon d'attaque 61 de l'arbre secondaire 60 portant le pignon fou 83 de cinquième soit sensiblement supérieur à celui du pignon d'attaque 51 de l'arbre secondaire 50 portant le pignon fou 82 de troisième. Il en est de même pour l'obtention de rapports de quatrième et de sixième à partir de l'unique pignon fixe 31 et des pignons fous identiques 84 et 85. Enfin pour obtenir un étagement satisfaisant des rapports de troisième à sixième, il est avantageux de choisir un rapport de dents entre les pignons fixes 22 et 31 tel que les ratios entre les démultiplications de troisième sur quatrième, de quatrième sur cinquième et de cinquième sur sixième soient identiques ou sensiblement identiques.

Les premier et second embrayages 40 et 41 permettent de lier sélectivement au moteur le premier arbre primaire plein 20 portant les pignons fixes 21 et 22 des rapports impairs et le second arbre primaire creux 30 qui portent les pignons fixes 31 et 32 des rapports pairs. En outre, tous les pignons fous peuvent être sélectivement liés aux arbres secondaires qui les portent par des dispositifs de crabotage simple ou double. Les pignons fous 81, 82 ,84 et 87 peuvent ainsi être liés sélectivement à l'arbre secondaire 50 qui les porte et les pignons fous 83, 85 et 86 peuvent être sélectivement liés à l'arbre secondaire 60 qui les porte. Le fonctionnement d'un crabot simple ou double étant connu de l'état de la technique, il ne fera pas l'objet d'un approfondissement particulier dans cette description. Un premier dispositif de crabotage double 100 permet de lier sélectivement en rotation à l'arbre secondaire 50 le pignon fou 81 pour obtenir le rapport de première ou le pignon fou 82 pour obtenir le rapport de troisième. Un second dispositif de crabotage double 101 permet de lier en rotation à l'arbre secondaire 50 le pignon fou 84 pour obtenir le rapport de quatrième et le pignon fou 87 pour obtenir le rapport de marche arrière. Un troisième dispositif de crabotage double 102 permet de lier sélectivement en rotation à l'arbre secondaire 60 le pignon fou 85 pour obtenir le rapport de sixième ou le pignon fou 86 pour obtenir le rapport de deuxième, enfin un crabot simple 103 permet de lier sélectivement en rotation à l'arbre secondaire 60 le pignon fou 83 pour obtenir le rapport de cinquième.

Les figures 2 à 8 illustrent le cheminement du couple du moteur à la couronne de différentiel selon chaque rapport engagé.

La figure 2 montre le cheminement du couple du moteur à la couronne de différentiel selon le rapport de marche arrière. Le couple est transmis du moteur à l'arbre primaire 30 par l'embrayage 41 fermé, puis de la pignon fixe 32 au pignon fou 86 du rapport de deuxième, puis du pignon fou 86 au pignon fou 87 de marche arrière, puis du pignon fou 87 à l'arbre secondaire 50 par le crabot double 101 en position craboté sur le pignon 87, puis de l'arbre secondaire 50 au pignon fixe 51 qui le transmet à la couronne 70.

La figure 3 illustre le cheminement du couple du moteur à la couronne de différentiel selon le rapport de première. Le couple est transmis du moteur à l'arbre primaire 20 par l'embrayage 40 fermé, puis du pignon fixe 21 au pignon fou 81, puis du pignon fou 81 à l'arbre secondaire 50 par le crabot double 100 en position craboté sur le pignon 81, puis de l'arbre secondaire 50 au pignon fixe 51 qui le transmet à la couronne 70.

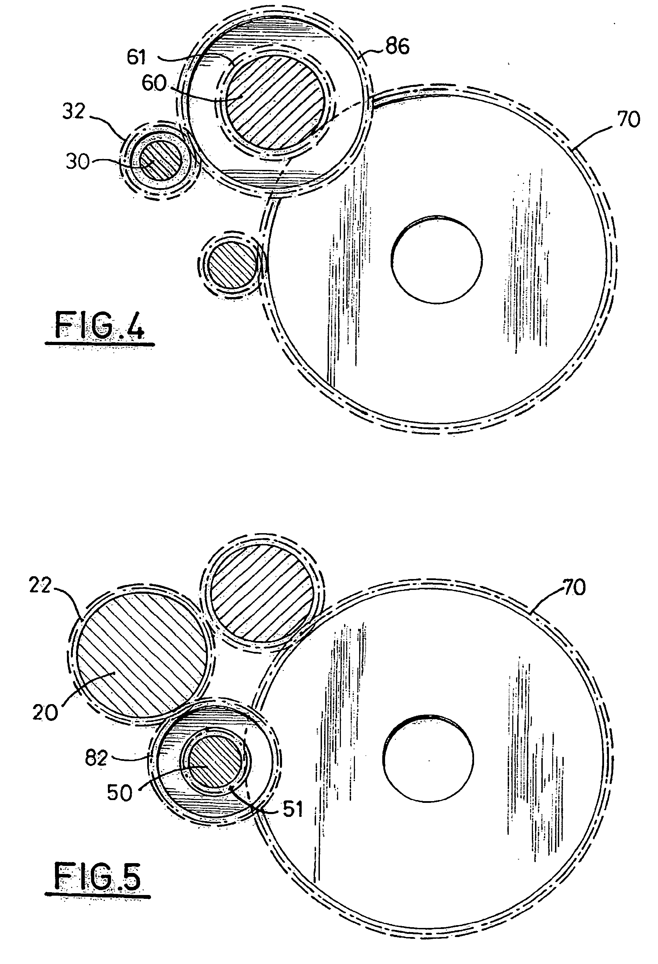

La figure 4 illustre le cheminement du couple du moteur à la couronne de différentiel selon le rapport de deuxième. Le couple est transmis du moteur à l'arbre primaire 30 par l'embrayage 41 fermé, puis du pignon fixe 32 au pignon fou 86, puis du pignon fou 86 à l'arbre secondaire 60 par le crabot double 102 en position craboté sur le pignon 86, puis de l'arbre secondaire 60 au pignon fixe 61 qui le transmet à la couronne 70.

La figure 5 illustre le cheminement du couple du moteur à la couronne de différentiel selon le rapport de troisième. Le couple est transmis du moteur à l'arbre primaire 20 par l'embrayage 40 fermé, puis du pignon fixe 22 au pignon fou 82, puis du pignon fou 82 à l'arbre secondaire 50 par le crabot simple 100 en position craboté sur le pignon 82, puis de l'arbre secondaire 50 au pignon fixe 51 qui le transmet à la couronne 70.

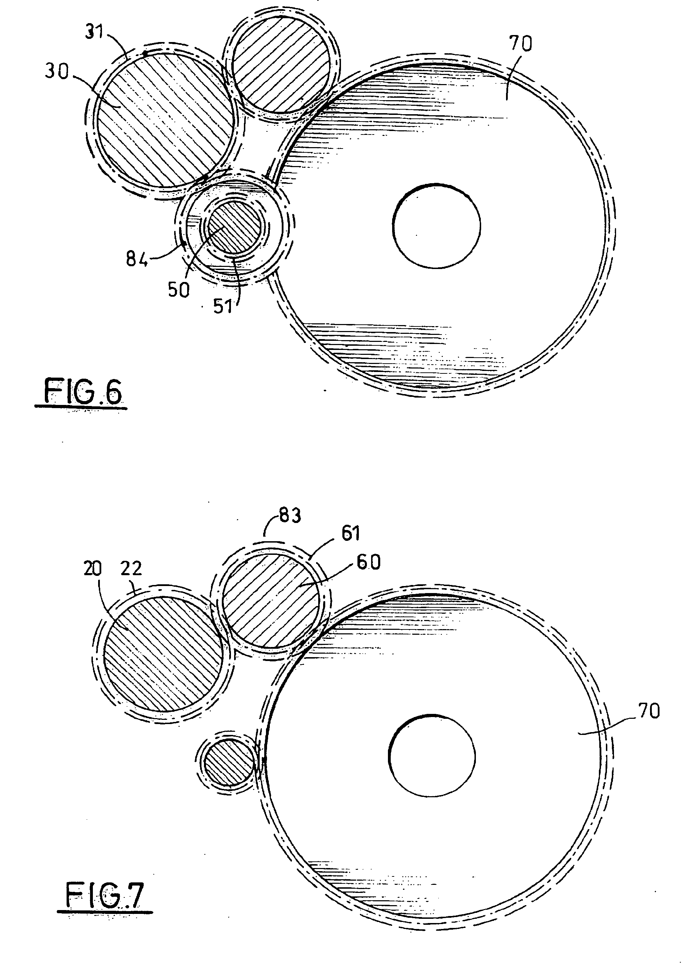

La figure 6 illustre le cheminement du couple du moteur à la couronne de différentiel selon le rapport de quatrième. Le couple est transmis du moteur à l'arbre primaire 30 par l'embrayage 41 fermé, puis du pignon fixe 31 au pignon fou 84, puis du pignon fou 84 à l'arbre secondaire 50 par le crabot double 101 en position craboté sur le pignon 84, puis de l'arbre secondaire 50 au pignon fixe 51 qui le transmet à la couronne 70.

La figure 7 illustre le cheminement du couple du moteur à la couronne de différentiel selon le rapport de cinquième. Le couple est transmis du moteur à l'arbre primaire 20 par l'embrayage 40 fermé, puis du pignon fixe 22 au pignon fou 83, puis du pignon fou 83 à l'arbre secondaire 60 par le crabot simple 103 en position craboté sur le pignon 83, puis de l'arbre secondaire 60 au pignon fixe 61 qui le transmet à la couronne 70.

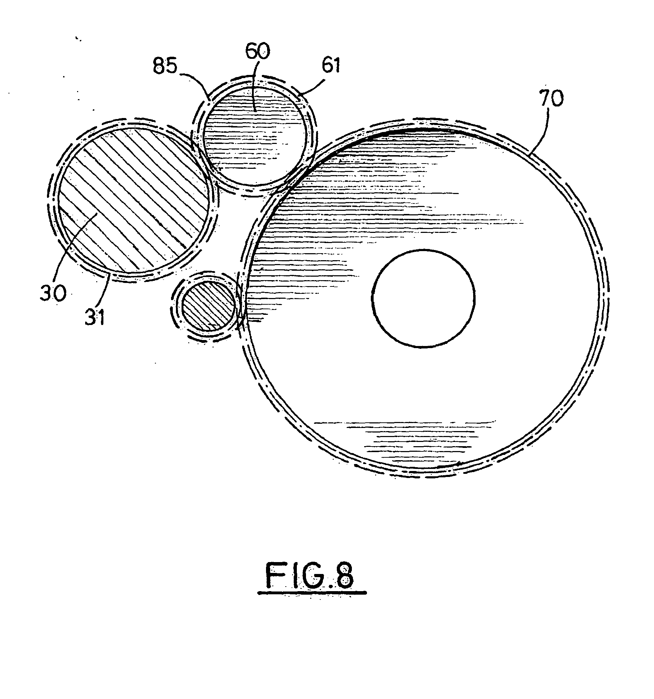

Enfin la figure 8 illustre le cheminement du couple du moteur à la couronne de différentiel selon le rapport de sixième. Le couple est transmis du moteur à l'arbre primaire 30 par l'embrayage 41 fermé, puis du pignon fixe 31 au pignon fou 85, puis du pignon fou 85 à l'arbre secondaire 60 par le crabot double 102 en position craboté sur le pignon 85, puis de l'arbre secondaire 60 au pignon fixe 61 qui le transmet à la couronne 70.

On constate que le passage d'un rapport donné au rapport immédiatement supérieur fait appel à un changement d'embrayage et d'arbre primaire. C'est la condition de réalisation de changement de rapport sans discontinuité du couple moteur, par actionnement simultané des deux embrayages.

## Revendications

1. Boîte de vitesses (10) à arbres parallèles et à engrenages comportant un arbre primaire plein (20) et un arbre primaire creux (30) concentriques portant des pignons fixes (21, 22, 31, 32), ainsi que deux arbres secondaires (50, 60) portant des pignons fous (81, 82, 83, 84, 85, 86), dans laquelle les pignons fixes (21, 32) des deux premiers rapports de marche avant sont portés respectivement par l'arbre primaire plein (20) et par l'arbre primaire creux (30), l'arbre primaire plein et l'arbre primaire creux (60) portant seulement deux pignons fixes chacun (21, 22, 31, 32) engrenant respectivement avec un seul pignon fou (81) porté par l'arbre secondaire (50), avec deux pignons fous (82, 83) identiques portés respectivement par le premier et le second arbre secondaire (50, 60), avec deux pignons fous (84, 85) identiques portés respectivement par le premier et le second arbre secondaire (50, 60), et avec un pignon fou (86) porté par l'arbre secondaire (60), les arbres secondaires (50, 60) attaquant une couronne de différentiel commune (70) par deux pignons fixes (51,61) **caractérisée en ce que** le rapport du nombre de dents des deux pignons fixes (51,61) donne le ratio du rapport de troisième sur le rapport de cinquième et celui du rapport de quatrième sur le rapport de sixième.

2. Boîte de vitesses (10) selon la revendication 1 **caractérisée en ce que** les pignons fixes (22, 31) de l'arbre plein (20) et de l'arbre creux (30) qui engrènent avec le pignon fou (82, 83 et 84, 85) de chaque arbre secondaire (50, 60) permettent d'établir respectivement avec ces pignons un troisième, un cinquième, un quatrième et un sixième rapport de marche avant

3. Boîte de vitesses (10) selon la revendication 2, **caractérisée en ce que** les ratios du rapport de troisième sur le rapport de quatrième, du rapport de quatrième sur le rapport de cinquième et du rapport de cinquième sur le rapport de sixième sont égaux ou sensiblement égaux.

4. Boîte de vitesses (10) selon l'une des revendications précédentes, **caractérisée en ce que** le pignon fou de marche arrière (87) engrène avec le pignon fou de deuxième (86) qui constitue un pignon intermédiaire de marche arrière.

5. Boîte de vitesses (10) selon l'une des revendications précédentes, **caractérisée en ce que** le premier arbre secondaire (50) porte les pignons fous (81, 82, 84, 87) des rapports de première, troisième, quatrième et de marche arrière, et **en ce que** le second arbre secondaire (60) porte les pignons fous (83, 85, 86) des rapports de cinquième, de sixième et de deuxième.

6. Boîte de vitesses (10) selon la revendication 5 **caractérisée en ce que** le premier arbre secondaire (50) porte le pignon fixe (51) qui a le plus petit nombre de dents, et **en ce que** le second arbre secondaire (60) porte le pignon fixe (61) qui a le plus grand nombre de dents.

7. Boîte de vitesses (10) selon l'une des revendications précédentes, **caractérisée en ce que** l'axe des arbres primaires (20, 30) est équidistant des axes des arbres secondaires (60, 50).

8. Boîte de vitesses (10), selon l'une des revendications précédentes, **caractérisée en ce que** le pignon fou (82) du rapport de troisième est identique au pignon fou (83) du rapport de cinquième, et **en ce que** le pignon fou (84) du rapport de quatrième est identique au pignon fou (85) du rapport de sixième.

9. Boîte de vitesses (10) selon la revendication 7 **caractérisée en ce qu'**elle comporte un premier groupe de crabotage double (100) permettant de craboter les rapports de première et de troisième, un second groupe de crabotage double (101) permettant de craboter les rapports de quatrième et de marche arrière, un troisième groupe de crabotage double (102) permettant de craboter les rapports de sixième et de deuxième et un crabot simple (103) permettant de craboter la cinquième.

## Claims

1. Gear box (10) having parallel shafts and having gear pairs comprising a solid primary shaft (20) and a hollow primary shaft (30) which are concentric, bearing fixed pinions (21, 22, 31, 32), in addition to two secondary shafts (50, 60) bearing idler pinions (81, 82, 83, 84, 85, 86) in which the fixed pinions (21, 32) of the two first forward gears are respectively borne by the solid primary shaft (20) and by the hollow primary shaft (30), the solid primary shaft and the hollow primary shaft (30) bearing only two fixed pinions (21, 22, 31, 32) respectively meshing with a single idler pinion (81) borne by the secondary shaft (50), with two identical idler pinions (82, 83) borne respectively by the first and the second secondary shaft (50, 60), with two identical idler pinions (84, 85) borne respectively by the first and the second secondary shaft (50, 60), and with an idler pinion (86) borne by the secondary shaft (60), the secondary shafts (50, 60) driving a common differential ring gear (70) by two fixed pinions (51, 61), **characterized in that** the ratio of the number of teeth of the two fixed pinions (51, 61) provides the ratio of the third gear to the fifth gear and that of the fourth gear to the sixth gear.

2. Gear box (10) according to Claim 1, **characterized in that** the fixed pinions (22, 31) of the solid shaft (20) and of the hollow shaft (30) which mesh with the idler pinion (82, 83 and 84, 85) of each secondary shaft (50, 60) make it possible to establish respectively with these pinions a third, a fifth, a fourth and a sixth forward gear.

3. Gear box (10) according to Claim 2, **characterized in that** the ratios of the third gear to the fourth gear, of the fourth gear to the fifth gear and of the fifth gear to the sixth gear are equal or substantially equal.

4. Gear box (10) according to one of the preceding claims, **characterized in that** the reverse gear idler pinion (87) meshes with the second gear idler pinion (86) which constitutes a reverse gear intermediate pinion.

5. Gear box (10) according to one of the preceding claims, **characterized in that** the first secondary shaft (50) bears the idler pinions (81, 82, 84, 87) of the first, third, fourth and reverse gears and **in that** the second secondary shaft (60) bears the idler pinions (83, 85, 86) of the fifth, sixth and second gears.

6. Gear box (10) according to Claim 5, **characterized in that** the first secondary shaft (50) bears the fixed pinion (51) which has the smaller number of teeth, and **in that** the second secondary shaft (60) bears the fixed pinion (61) which has the greater number of teeth.

7. Gear box (10) according to one of the preceding claims, **characterized in that** the axis of the primary shafts (20, 30) is equidistant from the axes of the secondary shafts (60, 50).

8. Gear box (10) according to one of the preceding claims, **characterized in that** the idler pinion (82) of the third gear is identical to the idler pinion (83) of the fifth gear and **in that** the idler pinion (84) of the fourth gear is identical to the idler pinion (85) of the sixth gear.

9. Gear box (10) according to Claim 7, **characterized in that** it comprises a first set of double dog clutches (100) making it possible to engage the first and third gears by a dog clutch, a second set of double dog clutches (101) making it possible to engage the fourth and reverse gears by a dog clutch, a third set of double dog clutches (102) making it possible to engage the sixth and second gears by a dog clutch and a single dog clutch (103) making it possible to engage the fifth gear by a dog clutch.

## Patentansprüche

1. Schaltgetriebe (10) mit parallelen Wellen und Räderzügen, die eine primäre Vollwelle (20) und eine primäre Hohlwelle (30), die konzentrisch sind und feste Ritzel (21, 22, 31, 32) tragen, sowie zwei Sekundärwellen (50, 60), die bewegliche Ritzel (81, 82, 83, 84, 85, 86) tragen, enthalten, wobei die festen Ritzel (21, 32) der zwei ersten Vorwärtsgänge von der primären Vollwelle (20) bzw. von der primären Hohlwelle (30) getragen werden, wobei die primäre Vollwelle und die primäre Hohlwelle (60) nur jeweils zwei feste Ritzel (21, 22, 31, 32) tragen, die mit einem einzigen beweglichen Ritzel (81), das durch die Sekundärwelle (50) getragen wird, kämmen, mit zwei gleichen beweglichen Ritzeln (82, 83), die von der ersten bzw. der zweiten Sekundärwelle (50, 60) getragen werden, zwei gleichen beweglichen Ritzeln (84, 85), die von der ersten und bzw. der zweiten Sekundärwelle (50, 60) getragen werden, und einem beweglichen Ritzel (86), das von der Sekundärwelle (60) getragen wird, wobei die Sekundärwellen (50, 60) mit einem gemeinsamen Differentialkranz (70) über zwei feste Ritzel (51, 61) in Eingriff sind, **dadurch gekennzeichnet, dass** das Verhältnis der Anzahl der Zähne der zwei festen Ritzel (51, 61) das Verhältnis des dritten Gangs zum fünften Gang und jenes des vierten Gangs zum sechsten Gang festlegt.

2. Schaltgetriebe (10) nach Anspruch 1, **dadurch gekennzeichnet, dass** die festen Ritzel (22, 31) der Vollwelle (20) und der Hohlwelle (30), die mit dem beweglichen Ritzel (82, 83 und 84, 85) jeder Sekundärwelle (50, 60) kämmen, ermöglichen, mit diesen Ritzeln einen dritten, einen fünften, einen vierten bzw. einen sechsten Vorwärtsgang zu schaffen.

3. Schaltgetriebe (10) nach Anspruch 2, **dadurch gekennzeichnet, dass** die Verhältnisse des dritten Gangs zum vierten Gang, des vierten Gangs zum fünften Gang und des fünften Gangs zum sechsten Gang gleich oder im Wesentlichen gleich sind.

4. Schaltgetriebe (10) nach einem der vorhergehenden Ansprüche, **dadurch gekennzeichnet, dass** das bewegliche Ritzel des Rückwärtsgangs (87) mit dem beweglichen Ritzel des zweiten Gangs (86), das ein Rückwärtsgang-Zwischenritzel bildet, kämmt.

5. Schaltgetriebe (10) nach einem der vorhergehenden Ansprüche, **dadurch gekennzeichnet, dass** die erste Sekundärwelle (50) die beweglichen Ritzel (81, 82, 84, 87) des ersten, des dritten, des vierten und des Rückwärtsgangs trägt und dass die zweite Sekundärwelle (60) die beweglichen Ritzel (83, 85, 86) des fünften, des sechsten und des zweiten Gangs trägt.

6. Schaltgetriebe (10) nach Anspruch 5, **dadurch gekennzeichnet, dass** die erste Sekundärwelle (50) jenes feste Ritzel (51) trägt, das die kleinste Anzahl von Zähnen hat, und dass die zweite Sekundärwelle (60) jenes feste Ritzel (61) trägt, das die größte Anzahl von Zähnen hat.

7. Schaltgetriebe (10) nach einem der vorhergehenden Ansprüche, **dadurch gekennzeichnet, dass** die Achse der Primärwellen (20, 30) von den Achsen der Sekundärwellen (60, 50) gleich beabstandet ist.

8. Schaltgetriebe (10) nach einem der vorhergehenden Ansprüche, **dadurch gekennzeichnet, dass** das bewegliche Ritzel (82) des dritten Gangs gleich dem beweglichen Ritzel (83) des fünften Gangs ist und dass das bewegliche Ritzel (84) des vierten Gangs gleich dem beweglichen Ritzel (85) des sechsten Gangs ist.

9. Schaltgetriebe (10) nach Anspruch 7, **dadurch gekennzeichnet, dass** es eine erste Gruppe von Doppelklauenkupplungen (100) enthält, die ermöglichen, den ersten und den dritten Gang zu koppeln, eine zweite Gruppe von Doppelklauenkupplungen (101) enthält, die ermöglichen, den vierten und den Rückwärtsgang zu koppeln, eine dritte Gruppe von Doppelklauenkupplungen (102) enthält, die ermöglichen, den sechsten und den zweiten Gang zu koppeln, und eine einfache Klauenkupplung (103) enthält, die ermöglicht, den fünften Gang zu koppeln.
